(19) Europäisches Patentamt
European Patent Office
Office européen des brevets

(11) EP 1 595 603 B1

(12) **EUROPEAN PATENT SPECIFICATION**

(45) Date of publication and mention
of the grant of the patent:
**21.02.2007 Bulletin 2007/08**

(51) Int Cl.:
*B05D 1/00* *(2006.01)*     *B05D 1/22* *(2006.01)*
*B01J 8/40* *(2006.01)*

(21) Application number: **05252781.9**

(22) Date of filing: **06.05.2005**

(54) **Process for coating particles**

Verfahren zur Beschichtung von Partikeln

Procédé de revêtement de particules

(84) Designated Contracting States:
**DE FR GB NL**

(30) Priority: **07.05.2004 US 841754**

(43) Date of publication of application:
**16.11.2005 Bulletin 2005/46**

(73) Proprietor: **SAMSUNG ELECTRONICS CO., LTD.**
**Suwon-si,**
**Gyeonggi-do (KR)**

(72) Inventors:
 • **Tokarski, Zbigniew**
  **Woodbury, MN 55125 (US)**
 • **Moudry, Ronald J.**
  **Woodbury, MN 55125 (US)**

 • **Kellie, Truman Frank**
  **Lakeland, MN 55043 (US)**
 • **Edwards, William D.**
  **New Richmond, WI 54017 (US)**
 • **Baker, James A.**
  **Hudson, WI 54016 (US)**

(74) Representative: **Moy, David et al**
  **Appleyard Lees,**
  **15 Clare Road**
  **Halifax HX1 2HY (GB)**

(56) References cited:
  **EP-A- 1 219 354**     **US-A- 4 024 295**
  **US-A- 4 071 304**     **US-A- 4 235 024**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The invention relates to a process for coating particles. More specifically, the invention relates to a process for coating particles using vibration.

Various techniques have been utilized to provide a coating on particles, such as spray coating and solvent evaporation coating. These processes are limited in the nature of the material that can be coated on the particle, in that the material to be coated must often be amenable to solvation in order to provide a liquid form coating composition.

Dry powders have been adhered to core particles in alternative processes such as mechanical fusion. In this process, a mixture of powder and core particles is fed into a chamber that may be heated. Rapidly moving parts in the chamber collide with the powder and core particles, causing them to collide at such velocities that they fuse to each other. Multiple passes may be used to create a thicker coating layer on a core particle or multiple different layers. Limitations of this process include excessive machine wear if the core particles are abrasive, a tendency to fracture hard core particles or break fragile core particles, difficulty in coating intricately shaped small articles, and difficulty in coating continuous articles such as fiber tow.

U.S. Patent No. 6,037,019 discloses a process for adhering a powder to a substrate. The process includes the steps of: a) providing an oscillating magnetic field, b) continuously introducing into the magnetic field coating material, a substrate, and a means of affixing the coating material to the substrate by forming a fluidized bed of at least the coating material and providing sufficient force to cause the coating material to adhere to the surface of the substrate, and c) continuously collecting the coated substrate.

A process for adhering a liquid to a particulate substrate is disclosed in U.S. Patent No. 5,962,082. The process comprises the steps of: a) providing an apparatus which can create an oscillating magnetic field within a chamber, b) providing particulate magnetic material within the chamber of said apparatus while said oscillating field is active, c) having in the chamber within the oscillating magnetic field a liquid coating material and a particulate substrate to be coated with said liquid, d) and having said magnetic field form a fluidized bed of at least said particulate magnetic material, said liquid coating material coating the surface of the particulate substrate, and e) optionally continuously collecting the coated particulate substrate.

The above-indicated coating processes have inherent limitations in the selection of either or both of the host particle and/or the material that is coated on the host particle. Additionally, some processes may introduce undesired components into the final composition, such as magnetic elements or residues thereof.

An aim of the present invention is to provide a process for adhering a coating material to a host particle, typically generally featuring (a) good and/or useful and/or beneficial propert(y)ies, and/or preferably addressing at least one or some of the problems or concerns noted above or in the art.

A further aim of the present invention is to provide an alternative process to those already known.

A further and preferred aim of embodiments of the invention is to provide an improved process, preferably with certain advantageous properties.

Other aims and/or advantages of the invention will be set forth in part in the description which follows and, in part, will be obvious from the description, or may be learned by practice of the invention.

According to the present invention there is provided a process as set forth in the appended claims. Preferred features of the invention will be apparent from the dependent claims, and the description which follows.

The present invention provides a process for adhering a coating material to a host particle. In this process, a blend comprising a coating material and host particles is provided in a coating vessel. The coating vessel comprising the blend is exposed to vibrational force in an amount sufficient to cause the coating material and the host particles to collide with sufficient force to cause the coating material to adhere to the surface of the host particle.

Thus, in a first aspect the present invention provides a process for adhering a coating material to a host particle, comprising the steps of:

> a) providing a blend comprising a coating material and host particles in a coating vessel, and
> b) exposing the coating vessel comprising the blend to vibrational force in an amount sufficient to cause the coating material and the host particles to collide with sufficient force to cause the coating material to adhere to the surface of the host particle,

wherein the resulting coated particles are toner particles.

The present process provides an economical and simple process for coating that is extremely flexible as to selection of materials that can be used as the host particle and/or coating materials. The process is easy to control and may be carried out with equipment components that are very low cost in both initial investment cost and maintenance costs. Because the amount of energy to which the materials are exposed in the coating process may be comparatively low, the process of the present invention may be physically gentle to the components. Thus, comparatively fragile or delicate coating materials or host particles may be utilized in the present process that are not suitable for use in other coating processes. This flexibility in selection of materials provides substantial benefit to the manufacturer.

Because only the exterior surface of the host particle need be coated with the coating material, the desired effect to be provided by that component may be achieved with a smaller amount of the coating material. Less material is therefore wasted as compared to conventional milling, grinding, extrusion, or blending methods that produce a mixture of material with particulate on the exterior surface and interior to the composition of the host particle. As a specific example, certain ingredients used in electrographic printing toner applications, such as charge directors, visual enhancement materials, and the like, are mostly or only beneficial when applied to the exterior of the toner particle. These toner ingredients are particularly beneficially applied to the surface of the toner particle by the process of the present invention.

The accompanying drawings, which are incorporated in and constitute a part of this application, illustrate several aspects of the invention and together with a description of the embodiments serve to explain the principles of the invention. A brief description of the drawings is as follows:

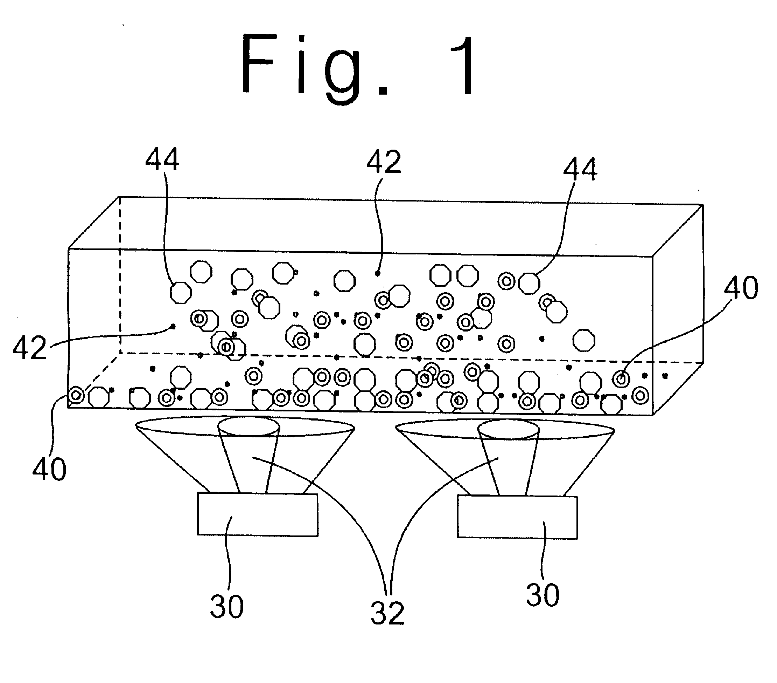

Fig. 1 is a schematic diagram of a system for coating a host particle with a coating material comprising a coating vessel that is imparted with vibrational force by audio speakers.

In the process of the present invention, host particles to be coated with a coating material may be merely carrier materials, or may themselves perform an active function with respect to the ultimate use of the coated particles. In the case of the host particle being a carrier material, the particle may be in the nature of a filler or carrier to provide a vehicle for delivery of the one or more ingredients contained in the coating material. The configuration of such coated particles may provide desired surface area for what would otherwise be a very small volume of active ingredient. Such a configuration may be particularly valuable when the carrier material contains a catalyst or the like. In this embodiment of the present invention, the host particle may be any inorganic or organic material suitable in cost that does not interfere with the function of the particle.

Alternatively, the host particle may itself perform some function in the use of the ultimate coated particle. For example, the host particle may itself be a biologically or chemically reactive material (such as a catalyst or a reactant for a chemical reaction), or an active material such as a flavorant for food. The host particle may preferably be an adhesive material to bond one or more ingredients contained in the coating material or to bond two diverse substrates to each other. In the embodiment where the host particle itself performs some function in the use of the ultimate coated particle, the coating material applied thereto may itself be a biologically or chemically reactive material or an active material. Particularly preferred coating materials comprise ingredients that are visually apparent, such as those that impart a visible color to the coated particle, or that appear to sparkle or glow in the dark. Another particularly preferred coating material comprises ingredients that contain a charge, thereby imparting a positive or negative charge to the coated particle. Such coated particles may be directed by the use of charge systems, and are particularly useful for electrographic imaging systems. In a preferred embodiment, the coating material may be a surface modifying material that affects flowability, dispersibility, wettability, and the like. Alternatively, the coating material may be a protective coating that performs a delayed release or controlled release function. The coating material may, for example, act as a protective element whereby the host particle may be protected from adverse environmental conditions such as humidity, chemical sensitivity and light sensitivity.

The host particle may be initially provided in the form of loose agglomerates when agglomerates are easily broken up by collisions in the coating vessel. However, the friability of the host particle may vary over a broad range and is limited only that the host particle should be durable enough to permit interaction of the individual particles under in the presence of numerous collisions, without breakage of the primary host particles. Preferably, the host particles have a Moh's hardness of less than about 4.

In a preferred embodiment of the present invention, the host particles are polymeric binder particles. In one embodiment, the host particles are polymeric binder particles having a $T_g$ at the surface of the particles of less than about 50° C.

As used herein, the term "copolymer" encompasses both oligomeric and polymeric materials, and encompasses polymers incorporating two or more monomers. As used herein, the term "monomer" means a relatively low molecular weight material (i.e., generally having a molecular weight less than about 500 Daltons) having one or more polymerizable groups. "Oligomer" means a relatively intermediate sized molecule incorporating two or more monomers and generally having a molecular weight of from about 500 up to about 10,000 Daltons. "Polymer" means a relatively large material comprising a substructure formed by two or more monomeric, oligomeric, and/or polymeric constituents and generally having a molecular weight greater than about 10,000 Daltons.

In one preferred embodiment, the host particles are polymeric binder particles formed from random polymers. Such polymeric binder particles may be manufactured using a wide range of fabrication techniques. One widespread fabrication technique involves melt mixing the ingredients, comminuting the solid blend that results to form particles, and then classifying the resultant particles to remove fines and larger material of unwanted particle size.

Preferably, the polymeric binder particle comprises a graft amphipathic copolymer. The polymeric binder particles comprise a polymeric binder comprising at least one amphipathic copolymer with one or more S material portions and one or more D material portions.

As used herein, the term "amphipathic" refers to a copolymer having a combination of portions having distinct solubility and dispersibility characteristics in a desired liquid carrier that is used to make the copolymer. Preferably, the liquid carrier (also sometimes referred to as "carrier liquid") is selected such that at least one portion (also referred to herein as S material or block(s)) of the copolymer is more solvated by the carrier while at least one other portion (also referred to herein as D material or block(s)) of the copolymer constitutes more of a dispersed phase in the carrier.

From one perspective, the polymer particles when dispersed in the liquid carrier may be viewed as having a core/shell structure in which the D material tends to be in the core, while the S material tends to be in the shell. The S material thus functions as a dispersing aid, steric stabilizer or graft copolymer stabilizer, to help stabilize dispersions of the copolymer particles in the liquid carrier. Consequently, the S material may also be referred to herein as a "graft stabilizer." The core/shell structure of the binder particles tends to be retained when the particles are dried when incorporated into liquid toner particles.

Typically, organosols are synthesized by nonaqueous dispersion polymerization of polymerizable compounds (e.g. monomers) to form copolymeric binder particles that are dispersed in a low dielectric hydrocarbon solvent (carrier liquid). These dispersed copolymer particles are sterically-stabilized with respect to aggregation by chemical bonding of a steric stabilizer (e.g. graft stabilizer), solvated by the carrier liquid, to the dispersed core particles as they are formed in the polymerization. Details of the mechanism of such steric stabilization are described in Napper, D.H., "Polymeric Stabilization of Colloidal Dispersions," Academic Press, New York, N.Y., 1983. Procedures for synthesizing self-stable organosols are described in "Dispersion Polymerization in Organic Media," K.E.J. Barrett, ed., John Wiley: New York, N.Y., 1975.

Glass transition temperature, $T_g$, refers to the temperature at which a (co)polymer, or portion thereof, changes from a hard, glassy material to a rubbery, or viscous, material, corresponding to a dramatic increase in free volume as the (co)polymer is heated. The $T_g$ can be calculated for a (co)polymer, or portion thereof, using known $T_g$ values for the high molecular weight homopolymers and the Fox equation expressed below:

$$1/T_g = w_1/T_{g1} + w_2/T_{g2} + \ldots w_i/T_{gi}$$

wherein each $w_n$ is the weight fraction of monomer "n" and each $T_{gn}$ is the absolute glass transition temperature (in degrees Kelvin) of the high molecular weight homopolymer of monomer "n" as described in Wicks, A. W., F. N. Jones & S. P. Pappas, Organic Coatings 1, John Wiley, NY, pp 54-55 (1992).

In the practice of the present invention, values of $T_g$ for the polymer of the binder or portions thereof (such as the D or S portion of the graft copolymer) may be determined using the Fox equation above, although the $T_g$ of the copolymer as a whole may be determined experimentally using e.g., differential scanning calorimetry.

The glass transition temperatures ($T_g$'s) of the S and D portions may vary over a wide range and may be independently selected to enhance manufacturability and/or performance of the resulting toner particles. The $T_g$'s of the S and D portions will depend to a large degree upon the type of monomers constituting such portions. Consequently, to provide a copolymer material with higher $T_g$, one can select one or more higher $T_g$ monomers with the appropriate solubility characteristics for the type of copolymer portion (D or S) in which the monomer(s) will be used. Conversely, to provide a copolymer material with lower $T_g$, one can select one or more lower $T_g$ monomers with the appropriate solubility characteristics for the type of portion in which the monomer(s) will be used.

Alternatively, the host particle may be a non-polymeric material. Preferred such non-polymerics are softer metals, such as gold, copper, and the like. Other preferred non-polymerics are minerals, such as talc, gypsum and the like.

In a preferred aspect of the present invention, the coating material is provided as a dry material. Coating materials, when in particulate form, can be of any of a wide variety of shapes such as, for example, spherical, flake, and irregular shapes.

In one aspect of the present invention, the coating material may be provided as brittle particulates that further break down into finer particles during the vibrational coating process. Under the coating conditions of the present invention, coating materials of this class beneficially are provided as a fine coating in near complete coverage of the host particle surface. In this embodiment, a very small amount by weight of a coating material provides the functional benefit of what in previous configurations required a much larger percentage of material by weight. An example of this embodiment is the use of fragile silica on toner particles, wherein the silica provides exceptional visual enhancement effect at a surprisingly low weight percentage based on total toner composition.

Alternatively, the coating material may be provided in liquid form. In this embodiment, the liquid may be introduced into the composition either independently of the host particle to be coated (e.g., added before, after or during initiation of the movement of the particles, before, with or after any introduction of any particles to be coated, by spray, injection, dripping, carriage on other particles, and any other method of providing liquid into the chamber so that it may be contacted by moving particles and distributed throughout the coating chamber) or added with particulate materials (e.g., the particles may be pretreated or pre-coated with liquid and the particle movement process initiated or coated, or the liquid may be added simultaneously through the same or different inlet means). Pre-treated (pre-coated) particles may be provided before or during movement of the particles. All that needs to be done to accomplish liquid coating of particles within the bed is to assure that at some time during particle movement, both the liquid to be coated and the particles which are desired to be coated are present within the system. The physical forces operating within the system will assure that the liquid is evenly spread over the particles if the particles and liquid are allowed to remain in the system for a reasonable time. The time during which the system equilibrates may range from a few seconds to minutes, partially dependent upon the viscosity of the liquid. The higher the viscosity of the liquid, the more time it takes for the liquid to be spread over the particles surfaces. This time factor can be readily determined by routine experimentation and can be estimated and correlated from the viscosity, particle sizes, relative wetting ability of the liquid for the particle surface and other readily observable characteristics of the system.

The weight ratio of host particle to coating material coated on the host particle in the resulting coated particle is preferably from about 100:1 to 1:20, more preferably 50:1 to 1:1, and most preferably 20:1 to 5:1.

Preferably, the volume mean particle diameter ($D_v$) of the host particles, determined by laser diffraction particle size measurement, are in the range of about 0.05 to about 50.0 microns, more preferably in the range of about 3 to about 10 microns, most preferably in the range of about 5 to about 7 microns. When the coating material is a particle, the ratio of diameter of the host particle to the coating particle is preferably greater than about 20.

In a preferred embodiment of the present invention, the blend is provided with additional collision media to assist in the coating process. Such additional collision media preferably has a density higher than the host particles and the coating material. Preferably, the additional collision media have a density greater than 2 g/cm³ and the coating material and host particles have a density less than 2 g/cm³. In another embodiment, the additional collision media have a density greater than 5 g/cm³. Typically, in addition to benefit in facilitating coating of the host particles with coating material, higher density collision media tend to be more wear resistant.

The additional collision media preferably is harder than the coating material and host particles in order to prevent wear of the media during the manufacture process, and minimize the introduction of impurities from the material of the media into the coated particles as provided herein. Most preferably, the additional collision media has a Rockwell C Scale Hardness value greater than about 40, more preferably greater than about 50, and most preferably greater than about 60.

Alternatively, the additional collision media may have a hardness selected to predictably wear under coating conditions to introduce a predetermined amount of material to the coated particles as prepared herein. Such media may, for example, be used to introduce and evenly distribute very small amount of material at concentration levels that would otherwise be difficult to achieve. Such material provided by wear of the collision media may provide chemical or physical property benefits, or may provide visual benefit by imparting a color or visually perceptible effect to the coated particles.

The additional collision media can range in size from less than the size of the powder of the coating material being applied to over 1000 times the size of the host particle being coated. If the additional collision media are too small, they can be difficult to separate from a coated host particles. Generally, the additional collision media range in size in the average largest dimension (i.e. the diameter, when spheroidal in shape) from about 0.005 μm to about 1 cm, more preferably from about 0.05 mm to about 10 mm, yet more preferably from about 0.1 mm to about 5 mm, and most preferably from about 0.5 mm to about 3 mm.

Preferred such additional collision media include milling media such as dense crystallized glass beads (such as Hi Bea Ceram C-20, 0.8-1.2 mm diameter, Hv hardness 880 Kgf/mm, specific density 3.18g/cm³ obtained from Ohara Corp. New Jersey, USA), hardened chrome steel, stainless steel, high density alumina, porcelain, silicon carbide, flint pebbles, various types of zirconia (such as zirconia beads and yttrium stabilized zirconium beads), silica and the like.

Preferably, the weight of the additional collision media should be approximately equal to the weight of the blend in the coating vessel at a given time.

Depending on the ultimate use of the resulting coated particles, the additional collision media may remain in the final composition or preferably are removed from the blend after the coating material is adhered to the surface of the host particle.

Other ingredients may also be incorporated in the blend as desired for the final coated particles. Such ingredients may be provided in the host particle, the coating material, or added as a separate ingredient to the blend before, during or after imparting vibrational force as described herein. Examples of such ingredients include colorants, charge control additives, stabilizers, surface modifying agents, flavorants, and the like.

The blend as discussed above is provided in a coating vessel for conducting the coating operation. Vibrational force is imparted to the coating vessel in a manner that causes collision of the coating material and the host particles so that coating will take place. The vessel may be made from any suitable material and construction that will transfer energy to the blend to cause these collisions. Preferably, the coating vessel is prepared from a thin, light material that will readily and efficiently transfer vibration energy to the blend disposed therein. In one embodiment, the coating vessel is sufficiently thin and flexible that the surfaces of the vessel itself will deflect or flex under the vibrational force to impart energy to the blend. An example of such a material would be a thin, flexible aluminum pan. In another embodiment, the coating vessel may be a thicker, heavier material, such as an aluminum or stainless steel pan that does not flex. In this embodiment, the coating vessel may be subjected to forces that result in a relatively large positional displacement, thereby causing the host particles and the coating material to "bounce" in the coating vessel. Optionally, the coating vessel can be of a variety of non-metallic materials such as flint glass; tempered glass, e.g., PYREX™ glass; synthetic organic plastic materials such as polytetrafluoroethylene, polyethylene, polypropylene, polycarbonate and nylon; and ceramic materials.

Preferably, the coating vessel is light in weight, thereby reducing the total amount of energy input required to cause collisions of the host particles and the coating material as provided in the present invention. Most preferably, the coating vessel comprises at least one wall that will oscillate or vibrate in response to vibration force, thereby facilitating transfer of the energy imparted to the coating vessel to the blend contained therein.

The thickness of the chamber wall should be sufficient to withstand the collisions of the particles to be disposed therein, and depends on the materials used. Appropriate thickness can readily be determined by those skilled in the art. When polycarbonate is used to form the chamber, a suitable wall thickness is preferably from 0.1 mm to 25 mm, more preferably from 1 mm to 5 mm, most preferably from 1 mm to 3 mm.

The shape of the chamber can be cylindrical, spherical, polyhedral or irregular. The chamber can be of any orientation, such as, for example, vertical, horizontal, angular, or corkscrew.

The amount of vibrational force imparted to the coating vessel must be sufficient to cause collisions as discussed above. Preferably, sufficient vibrational force is imparted to the coating vessel to fluidize the coating material and the host particles. Surprisingly, the present process is quite gentle as compared to other techniques of coating that use collisions of materials. Preferably, the vibrational force imparted to the coating vessel is sufficiently low that minimal amount of host particle or coating material fracturing is observed. Advantageously, the process of the present invention may be readily controlled in energy input to minimize the creation of undesirable fines. Additionally, the use of low amounts of energy in the process tends to reduce the amount of heat to which the sample material is exposed. The present invention therefore expands the possible selection of polymers that may be used as a component of either the host particle or the coating material, because higher $T_g$ polymers may be used in either ingredient as compared to higher energy coating techniques that would tend to soften the polymer, leading to particle aggregation. In one aspect, the present invention allows fine-tuning of the polymer selection to the energy level of the process. In an embodiment of the present invention, energy is imparted to the blend at a rate of less than about 0.1 watts per gram of the blend, and preferably less than about 0.025 watts per gram of the blend.

The present process facilitates control of the amount of energy imparted to the blend by using parameters that are easily adapted to controls. In one embodiment, the vibrational force is imparted by a device that can be modulated in frequency. In another embodiment, the vibrational force is imparted by a device that can be modulated in amplitude. Preferably, the vibrational force is imparted by a device that can be modulated both in frequency and amplitude.

Any suitable system may be used to impart vibrational force to the coating vessel. In one embodiment, the vibrational force is imparted by mechanical displacement of the coating vessel. For example, the coating vessel may be mounted on a mechanically actuated "shaker" device. Alternatively, the vibrational force may be imparted by physical impact of a striking mechanism on the coating vessel. For example, pistons or other such structures may be actuated (for example, mechanically or electromechanically) to strike one or more locations on the coating vessel, transferring vibrational force to the vessel.

In another embodiment of the present invention, the vibrational force may be imparted to the coating vessel acoustically or pneumatically. For example, speakers may be positioned to impart sound waves (at audible or inaudible frequencies) in an amount sufficient to cause the coating material and the host particles to collide. In another example, speakers may be mounted in a sealed manner to that air pressure is transmitted to a flexible coating vessel upon traversal of the speaker cone, thereby causing the coating material and the host particles to collide.

Optionally, adhesion of the coating to the host particle is enhanced through the use of processing conditions or chemical bonding techniques. For example the coating process may be carried out at somewhat elevated temperature so that the surface of the host particle, if polymeric in nature, will become at least partially tacky, thereby enhancing adhesion of the coating material to the host particle by adhesive properties. In this embodiment, the process temperature is carefully balanced with concentration of both the host particles and the coating material, as well as other factors (for example, the Tg of the polymer, and particularly of the S portion when the polymer of the host particle is an amphipathic graft copolymer), to minimize undesirable agglomeration of host particles during the particle coating process. Preferably, the coating process is carried out at an environmental temperature in the vessel in which the coating process takes place that is from about 10°C to about 35°C below the Tg of the polymeric binder particle. In a preferred embodiment, the polymeric binder particle is a graft copolymer having S and D portions, and the environmental temperature in the vessel is from about 10°C to about 35°C below the Tg of the S portion of the polymeric binder particle.

In another embodiment of enhancement of adhesion of the coating to the host particle, the chemical affinity of one or more materials in the coating composition to the host particle is enhanced by use of a bridging chemical, such as an adhesive, or by the incorporation of chemical functionalities on both the material of the coating and the host particle that will form covalent bonds or exhibit an affinity to provide enhanced adhesion of one or more coating materials to the host particle.

Enhanced adhesion of the coating to the polymer binder particle is particularly desirable in both dry and liquid toner environments. In dry toner compositions, transport of the toner may cause slight collisions leading to adhesion failure. Likewise, in liquid toner compositions, poor adhesion of the coating may result in undesired dissociation of the coating from the polymeric binder particle during storage or use. In either environment, inadequate adhesion of the coating material to the binder particle may result in fines that cause development problems, such as wrong sign toner issues.

Because of the nature of the present process, a wide variety of materials may be selected for coating and to be coated. The resulting particles may therefore comprise compositions that are difficult or impossible to achieve by other coating processes. For example, as noted above, one known process of coating certain materials involves use of magnetic components in an oscillation magnetic field. In such processes, it would be expected that some residue of magnetic material would remain in the final product composition. In contrast, in a preferred embodiment of the present invention the blend is substantially free of magnetic material.

According to the present invention, the resulting coated particles are toner particles for an electrographic printing process. Preferred graft amphipathic copolymers for use in the binder particles are described in Qian et al, U.S. Serial No. 10/612,243, filed on June 30, 2003, entitled ORGANOSOL INCLUDING AMPHIPATHIC COPOLYMERIC BINDER AND USE OF THE ORGANOSOL TO MAKE DRY TONERS FOR ELECTROGRAPHIC APPLICATIONS (published as US 2004/0091806 A1) and Qian et al., U.S. Serial No. 10/612,535, filed on June 30, 2003, entitled ORGANOSOL INCLUDING AMPHIPATHIC COPOLYMERIC BINDER HAVING CRYSTALLINE MATERIAL, AND USE OF THE ORGANOSOL TO MAKE DRY TONER FOR ELECTROGRAPHIC APPLICATIONS (published as US 2004/0091805 A1) for dry toner compositions; and Qian et al., U.S. Serial No. 10/612,534, filed on June 30, 2003, entitled ORGANOSOL LIQUID TONER INCLUDING AMPHIPATHIC COPOLYMERIC BINDER HAVING CRYSTALLINE COMPONENT (published as US 2004/0091808 A1); Qian et al., U.S. Serial No. 10/612,765, filed on June 30, 2003, entitled ORGANOSOL INCLUDING HIGH Tg AMPHIPATHIC COPOLYMERIC BINDER AND LIQUID TONER FOR ELECTROPHOTOGRAPHIC APPLICATIONS (published as US 2004/0091809 A1); and Qian et al., U.S. Serial No. 10/612,533, filed on June 30, 2003, entitled ORGANOSOL INCLUDING AMPHIPATHIC COPOLYMERIC BINDER MADE WITH SOLUBLE HIGH Tg MONOMER AND LIQUID TONERS FOR ELECTROPHOTOGRAPHIC APPLICATIONS (published as US 2004/0091807 A1) for liquid toner compositions, which are hereby incorporated by reference. Particularly preferred graft amphipathic copolymers for use in the binder particles comprise an S portion having a glass transition temperature calculated using the Fox equation (excluding grafting site components) of at least about 90°C, and more preferably from about 100°C to about 130°C.

Preferably, the coating material preferably comprises at least one visual enhancement additive. Preferably, the visual enhancement additive is substantially all located in the coating on the surface of the toner particle. This configuration is markedly different from previous toner configurations, where the visual enhancement additives were homogenously mixed with the polymeric binder materials. This unique configuration provides significant benefits in providing a unique protective element whereby the polymeric binder component of the toner particle may be protected from adverse environmental conditions such as humidity, chemical sensitivity and light sensitivity, without addition of ingredients that do not contribute to (or that may even adversely effect) the functionality of the toner in its ultimate use. Further, such external coating of the polymeric binder may provide favorable anti-agglomeration functionality or other interaction functionality between the particles without the need to specifically add slip agents or other such materials. Location of the visual enhancement additive at the surface of the binder particle may provide better color saturation, thereby providing superior optical density without increasing the overall amount of visual enhancement additive in the toner particle as compared to prior art toners. Surprisingly, the location of the visual enhancement additive and optional other components at the surface of the binder particle does not adversely affect the adherence of the toner particle to the final substrate in imaging processes.

In another particularly preferred embodiment, the toner particle prepared by the process of the present invention is prepared from a binder comprising at least one amphipathic graft copolymer comprising one or more S material portions and one or more D material portions. Such amphipathic graft copolymers provide particular benefit in unique geometry of the copolymer that may particularly facilitate coating of polymeric binder particles with coating materials. In a particularly preferred embodiment, the S portion of the amphipathic graft copolymer may have a relatively low $T_g$, while the D portion has a higher $T_g$ than the S portion. This embodiment provides a polymeric binder particle having a surface that is highly receptive to coating with a coating material, while the overall $T_g$ of the polymeric binder particle is not so low as to provide a toner particle that blocks or sticks together during storage or use.

Preferably, the coated particle to be prepared by the present invention is a toner particle, and the coating material comprises at least one charge control agent or charge director.

In a preferred embodiment, the coating process is a continuous process. In such a process, a certain amount of the coating material coats the host particles until a state of equilibrium is reached. Once a state of equilibrium is reached, this is maintained while the continuous coating process progresses. This is an improvement over the time consuming batch process that may or may not have time to reach a state of equilibrium and hence not give consistently uniform coatings.

Turning now to the drawings, wherein like numbers represent like parts, Fig. 1 is a schematic diagram of a system 10 for coating a host particle 40 with a coating material 42. In this system 10 as shown, a coating vessel 20 is provided having sufficient volume to contain a blend of host particles 40, coating material 42 and additional collision media 44. The blend as shown comprises coating material 42 in the form of small, dry particles, and additional collision media 44 in the form of larger spherical materials. System 10 is additionally provided with audio speakers 30, having speaker cones 32 that during ordinary operation of the speakers 30 traverse (in a vertical direction as shown) toward and away from the coating vessel 20. Preferably, speakers 30 are provided without a protective grill, so that each speaker cone 32 can come into direct physical contact with coating vessel 20 when the speaker 30 is provided with a signal at a predetermined amplitude. Alternating electrical signals are sent to the speakers 30 in an amplitude to cause the speaker cone 32 to strike the coating vessel 20, thereby imparting vibrational force to the blend of host particles 40, coating material 42 and additional collision media 44 contained therein. The frequency and amplitude of the signal may be adjusted to provide the desired rate and magnitude of collisions of the materials of the blend. Preferably, the frequency and amplitude of the signal is adjusted to achieve fluidization of the blend. Alternatively, speakers 30 may be positioned so that speaker cones 32 do not come into direct physical contact with coating vessel 20 when the speaker 30 is provided with a signal at a predetermined amplitude. In this embodiment, vibration of the coating vessel 20 is achieved through transmission of sound waves, and not through direct impact of the coating vessel 20 by speaker cones 32.

## EXAMPLES

### Test Methods and Apparatus

In the following toner composition examples, percent solids of the graft stabilizer solutions and the organosol and liquid toner dispersions were determined thermo-gravimetrically by drying in an aluminum weighing pan an originally-weighed sample at 160°C for four hours, weighing the dried sample, and calculating the percentage ratio of the dried sample weight to the original sample weight, after accounting for the weight of the aluminum weighing pan. Approximately two grams of sample were used in each determination of percent solids using this thermogravimetric method.

In the practice of the invention, molecular weight is normally expressed in terms of the weight average molecular weight, while molecular weight polydispersity is given by the ratio of the weight average molecular weight to the number average molecular weight. Molecular weight parameters were determined with gel permeation chromatography (GPC) using tetrahydrofuran as the carrier solvent. Absolute weight average molecular weight were determined using a Dawn DSP-F light scattering detector (Wyatt Technology Corp., Santa Barbara, Calif.), while polydispersity was evaluated by the ratio of the measured weight average molecular weight value to the number average molecular weight value determined with an Optilab 903 differential refractometer detector (Wyatt Technology Corp., Santa Barbara, Calif.).

Organosol and liquid toner particle size distributions were determined by the Laser Diffraction Light Scattering Method using a Horiba LA-900 or LA-920 laser diffraction particle size analyzer (Horiba Instruments, Inc., Irvine, Calif.). Liquid samples were diluted approximately 1/10 by volume in Norpar™ 12 and sonicated for one minute at 150 watts and 20 kHz prior to measurement in the particle size analyzer according to the manufacturer's instructions. Dry toner particle samples were dispersed in water with 1% Triton X-100 surfactant added as a wetting agent. Particle size was expressed as both a number mean diameter ($D_n$) and a volume mean diameter ($D_v$) and in order to provide an indication of both the fundamental (primary) particle size and the presence of aggregates or agglomerates.

One important characteristic of xerographic toners is the toner's electrostatic charging performance (or specific charge), given in units of Coulombs per gram. The specific charge of each toner was established in the examples below using a blow-off tribo-tester instrument (Toshiba Model TB200, Toshiba Chemical Co., Tokyo, Japan). To use this device, the toner is first electrostatically charged by combining it with a carrier powder. The latter usually is a ferrite powder coated with a polymeric shell. The toner and the coated carrier particles are brought together to form the developer. When the developer is gently agitated, tribocharging results in both of the component powders acquiring an equal and opposite electrostatic charge, the magnitude of which is determined by the properties of the toner, along with any compounds deliberately added to the toner to affect the charging (e.g., charge control agents).

Once charged, the developer mixture is placed in a small holder inside the blow-off tribo-tester. The holder acts a charge-measuring Faraday cup, attached to a sensitive capacitance meter. The cup has a connection to a compressed nitrogen line and a fine screen at its base, sized to retain the larger carrier particles while allowing the smaller toner particles to pass. When the gas line is pressurized, gas flows thought the cup and forces the toner particles out of the cup through the fine screen. The carrier particles remain in the Faraday cup. The capacitance meter in the tester measures the charge of the carrier; the charge on the toner that was removed is equal in magnitude and opposite in sign. A measurement of the amount of toner mass lost yields the toner specific charge, in microCoulombs per gram.

For the present measurements, a silicon coated ferrite carrier (Vertex Image Systems Type 2) with a mean particle size of about 80-100 microns was used. Toner was added to the carrier powder to obtain a 3 weight percent toner content in the developer. This developer was gently agitated on a roller table for at least 45 minutes before blow-off testing. Specific charge measurements were repeated at least five times for each toner to obtain a mean value and a standard deviation. Tests were considered valid if the amount of toner mass lost during the blow-off was between 50 and 100% of the total toner content expected in each sample. Tests with mass losses outside of these values were rejected.

Thermal transition data for synthesized toner material was collected using a TA Instruments Model 2929 Differential Scanning Calorimeter (New Castle, DE) equipped with a DSC refrigerated cooling system (-70°C minimum temperature limit), and dry helium and nitrogen exchange gases. The calorimeter ran on a Thermal Analyst 2100 workstation with version 8.10B software. An empty aluminium pan was used as the reference. The samples were prepared by placing 6.0 to 12.0 mg of the experimental material into an aluminum sample pan and crimping the upper lid to produce a hermetically sealed sample for DSC testing. The results were normalized on a per mass basis. Each sample was evaluated using 10°C/min heating and cooling rates with a 5-10 min isothermal bath at the end of each heating or cooling ramp. The experimental materials were heated five times: the first heat ramp removes the previous thermal history of the sample and replaces it with the 10°C/min cooling treatment and subsequent heat ramps are used to obtain a stable glass transition temperature value - values are reported from either the third or fourth heat ramp.

<u>**Materials**</u>

The following abbreviations are used in the examples:

EMA: Ethyl methacrylate (available from Aldrich Chemical Co., Milwaukee, WI)
HEMA: 2-Hydroxyethyl methacrylate (available from Aldrich Chemical Co., Milwaukee, WI)
TCHMA: Trimethyl cyclohexyl methacrylate (available from Ciba Specialty Chemical Co., Suffolk, Virginia)
TMI: Dimethyl-m-isopropenyl benzyl isocyanate (available from CYTEC Industries, West Paterson, NJ)
V-601: Dimethyl 2, 2'-azobisisobutyrate (an initiator available as V-601 from WAKO Chemicals U.S.A., Richmond, VA)
DBTDL: Dibutyl tin dilaurate (a catalyst available from Aldrich Chemical Co., Milwaukee, WI)
St: styrene (available from Aldrich Chemical Co., Milwaukee, WI)
AIBN: azobisisobutyronitrile (an initiator available as VAZO-64 from DuPont Chemical Co., Wilmington, DE)
nBA: n-butyl acrylate (available from Aldrich Chemical Co., Milwaukee, WI)
MAA: methacrylic acid (available from Aldrich Chemical Co. Milwaukee, WI)

<u>**Nomenclature**</u>

In the following examples, the compositional details of each copolymer will be summarized by ratioing the weight percentages of monomers used to create the copolymer. The grafting site composition is expressed as a weight percentage of the monomers comprising the copolymer or copolymer precursor, as the case may be. For example, a graft stabilizer (precursor to the S portion of the copolymer) is designated TCHMA/HEMA-TMI (97/3-4.7), and is made by copolymerizing, on a relative basis, 97 parts by weight TCHMA and 3 parts by weight HEMA, and this hydroxy functional polymer was reacted with 4.7 parts by weight of TMI.

Similarly, a graft copolymer organosol designated TCHMA/HEMA-TMI//EMA (97-3-4.7//100) is made by copolymerizing the designated graft stabilizer (TCHMA/HEMA-TMI (97/3-4.7)) (S portion or shell) with the designated core monomer EMA (D portion or core) at a specified ratio of D/S (core/shell) determined by the relative weights reported in the examples.

**A. POSITIVELY CHARGED TONER PARTICLE**

**A1. Organosol Particle Preparation**

**Example A1**

A 50 gallon reactor equipped with a condenser, a thermocouple connected to a digital temperature controller, a nitrogen inlet tube connected to a source of dry nitrogen and a mixer, was charged with a mixture of 241.9 lb of Norpar™ 12, 66.4 lb of TCHMA, 2.10 lb of 98% HEMA and 0.86 lb of Wako V-601. While stirring the mixture, the reactor was purged with dry nitrogen for 30 minutes at flow rate of approximately 2 liters/minute, and the nitrogen flow rate was reduced to approximately 0.5 liters/min. The mixture was heated to 75 °C for 4 hours. The conversion was quantitative.

The mixture was heated to 100 °C and held at that temperature for 1 hour to destroy any residual V-601, and then was cooled back to 70 °C. The nitrogen inlet tube was then removed, and 0.11 lb of 95% DBTDL was added to the mixture, followed by 3.23 lb of TMI. The TMI was added drop wise over the course of approximately 5 minutes while stirring the reaction mixture. The mixture was allowed to react at 70 °C for 2 hours, at which time the conversion was quantitative.

The mixture was then cooled to room temperature. The cooled mixture was a viscous, transparent liquid containing no visible insoluble mater. The percent solids of the liquid mixture was determined to be 25.7% using the Halogen Drying Method described above. Subsequent determination of molecular weight was made using the GPC method described above; the copolymer had a $M_w$ of 299,100 and $M_w/M_n$ of 2.6 based on two independent measurements. The product is a copolymer of TCHMA and HEMA containing random side chains of TMI and is designed herein as TCHMA/HEMA-TMI (97/3-4.7% w/w) and can be used to make an organosol.

A 560 gallon reactor equipped with a condenser, a thermocouple connected to a digital temperature controller, a nitrogen inlet tube connected to a source of dry nitrogen and a mixer, was charged with a mixture of 1596.5 1b of Norpar™ 12, 203 1b of EMA, 98.6 lb of the graft stabilizer mixture from above @ 25.7% polymer solids, and 2.28 lb of V-601. While stirring the mixture, the reactor was purged with dry nitrogen for 30 minutes at flow rate of approximately 2 liters/minute, and then the nitrogen flow rate was reduced to approximately 0.5 liters/min. The mixture was heated to 70 °C for 5 hours. The conversion was quantitative.

Approximately 190 lb of n-heptane were added to the cooled organosol, and the resulting mixture was stripped of residual monomer using a rotary evaporator equipped with a dry ice/acetone condenser and operating at a temperature of 90 °C and a vacuum of approximately 15 mm Hg. The stripped organosol was cooled to room temperature, yielding an opaque white dispersion.

This gel organosol is designed TCHMA/HEMA-TMI//EMA (97/3-4.7//100 %w/w). The percent solid of the organosol dispersion after stripping was determined as 12.5% using Halogen Drying Method described above. Subsequent determination of average particles size was made using the light scattering method described above; the organosol had a volume average diameter 13.8 μm.

The organosol was centrifuged at 5000 rpm for 1 hour and the Norpar™ 12 was removed. The concentrated organosol was tray-dried at room temperature under a hood with high air circulation. The glass transition temperature was measured using DSC, as described above. The organosol particles had a $T_g$ of 62.7 °C.

**A2. Dry Toner by VAIC Coating of Pigment onto Organosol**

**Example A2**

Solid binder particles were coating by use of Vibrationally Assisted Interfacial Coating (VAIC) technique, as generally described above. The coating procedure was as follows:

**Procedure:**

1) The following charge was added to a clean, thin aluminum rectangular tray: 81 g of dry organosol binder, 9 g of black EK8200 pigment, and 200 g of 0.8-1.2 mm crystallized glass beads (Hi Bea Ceram C-20, 0.8-1.2 mm diameter, Hv hardness 880 Kgf/mm, specific density 3.18g/cm³ obtained from Ohara Corp. New Jersey, USA). In this situation, all of the charge was added prior to fluidization. It is understood that the addition sequence and addition time relative to fluidization can be varied.

2) The tray was rested on top of the two speakers. No tray support bracket was used.

3) The frequency and amplitude were selected to obtain, by visual inspection, the greatest amount of fluidization of the material and media without loss of the material over the sides of the tray. Note: a cover may be used that will prevent the material from escaping from the tray. The optimum generator frequency at the operating point was 34.5 Hz. The amplifier was set at maximum output. The sample was stirred with a spatula every 10-15 min to redistribute the toner to ensure uniform exposure of the toner to the VAIC coater speakers.

4) After 2 hr of continuous operation, the sample was sifted to remove the glass media beads from the coated toner material using an 8-inch diameter, No. 35, US Standard Testing Sieve (500 μm nominal opening, 315 μm nominal wire diameter, obtained from VWR Scientific, USA). Table 1 summarizes the sample conditions.

**Table 1, Sample Descriptions**

| Sample ID | Pigment (wt%) | Binder (wt%) | VAIC Residence Time (min) | VAIC Power Lever |
|---|---|---|---|---|
| 1 | 10 | 90 | 120 | 34.5 Hz / 4.5 watts |

## A3. Evaluation of Toner Particles

### i) Q/M by Blow-off Tester

The VAIC coated samples obtained from example A2 (0.5 g per sample) were mixed with a carrier powder (9.5 g, Canon 3000-4000 carrier, K101, Type TefV 150/250, Japan). After low speed mixing of 5, 15 and 30 minutes, the 0.2 g of toner/carrier developer was analyzed using a Toshiba Blow-off tester to obtain the specific charge (in microCoulombs/gram) of each developer. At least three such measurements were made, yielding a mean value and a standard deviation. The data was monitored for quality, namely, a visual observation that nearly all of the toner was blown off of the carrier during the measurement. Toners of known charging properties were also run as test calibration standards.

### ii) Toner Particle Size

The VAIC coated samples obtained from Example A2 were dispersed in distilled DDI (distilled and de-ionized) water which contain 1% Aerosol OT (dioctyl sodium sulfosuccinate, sodium salt, Fisher Scientific, Fairlawn, NJ). The toner particle size was measured using a Horiba LA-900 laser diffraction particle size analyzer, as described above.

**Table 2, Dry Toner By VAIC**

| Toner ID | $D_v$ ($\mu$m) | Q/M | |
|---|---|---|---|
| | | Test Section (min) | ($\mu$C/g) |
| 1 | 6.76 | 5 | 14.76 |
| | | 15 | 18.65 |
| | | 30 | 27.94 |

## B. NEGATIVELY CHARGED TONER PARTICLE

### EXAMPLE B1

### Step 1. Graft Stabilizer Preparation

A 50 gallon reactor equipped with a condenser, a thermocouple connected to a digital temperature controller, a nitrogen inlet tube connected to a source of dry nitrogen and a mixer, was charged with a mixture of 201.9 lb of Norpar™ 12, 66.4 lb of TCHMA, 2.10 lb of 98% HEMA and 0.86 lb of V-601. While stirring the mixture, the reactor was purged with dry nitrogen for 30 minutes at flow rate of approximately 2 liters/minute, and the nitrogen flow rate was reduced to approximately 0.5 liters/min. The mixture was heated to 75 °C for 4 hours. The conversion was quantitative.

The mixture was heated to 100 °C and held at that temperature for 1 hour to destroy any residual V-601, and then was cooled back to 70°C. The nitrogen inlet tube was then removed, and 0.11 lb of 95% DBTDL was added to the mixture, followed by 3.23 lb of TMI. The TMI was added drop wise over the course of approximately 5 minutes while stirring the reaction mixture. The mixture was allowed to react at 70°C for 2 hours, at which time the conversion was quantitative.

The mixture was then cooled to room temperature. The cooled mixture was a viscous, transparent liquid containing no visible insoluble mater. The percent solids of the liquid mixture was determined to be 26.2% using the Halogen Drying Method described above. Subsequent determination of molecular weight was made using the GPC method described above; the copolymer had a $M_w$ of 251,300 and $M_w/M_n$ of 2.8 based on two independent measurements. The product is a copolymer of TCHMA and HEMA containing random side chains of TMI and is designed herein as TCHMA/HEMA-TMI (97/3-4.7% w/w) and can be used to make an organosol.

**Step 2. Organosol Particle Preparation**

A 5 litre 3-necked round bottom flask equipped with a condenser, a thermocouple connected to a digital temperature controller, a nitrogen inlet tube connected to a source of dry nitrogen and an overhead stirrer, was charged with a mixture of 2573 g of Norpar™ 12, 486.08 g of styrene (commercially available from Aldrich Chemical, Milwaukee, WI), 98.81 g of n-butylacrylate (commercially available from Aldrich Chemical, Milwaukee, WI), 35.09 g of methacrylic acid (commercially available from Aldrich Chemical, Milwaukee, WI), 296.86 g of the graft stabilizer mixture prepared above (26.2%) and 10.50 g of AIBN. While the mixture was stirred, the reaction flask was purged with dry nitrogen for 30 minutes at a flow rate of approximately 2 liters/minute. A hollow glass stopper was then inserted into the open end of the condenser and the nitrogen flow rate was reduced to approximately 0.5 liter/min. The mixture was heated to 70°C with stirring, and the mixture was allowed to polymerize at 70°C for 16 hours. The conversion was quantitative.

Approximately 350 g of n-heptane were added to the cooled organosol, and the resulting mixture was stripped of residual monomer using a rotary evaporator equipped with a dry ice/acetone condenser and operating at a temperature of 90°C and a vacuum of approximately 15 mm Hg. The stripped organosol was cooled to room temperature, yielding an opaque white gel.

The particles were allowed to settle down and the mixture of ethyl alcohol and water was removed, and the concentration was tray-dried at room temperature under a hood with high air circulation. The percent of solids of this non-gel organosol dispersion was determined to be 18%. Subsequent determination of average particle size of the dried polymer was made using the Horiba 920 laser light scattering particle size analyzer (Horiba Instruments, Inc., Irvine, Calif.), which gave a volume average particle size of 10.3 microns. The glass transition temperature was measured using DSC, as described above. The particles had a $T_g$ of 68.54°C.

**Step 3. Dry Toner by VAIC Coating of Pigment onto Organosol Particle**

Solid binder particles were coating by use of vibration assisted interfacial coating ("VAIC") as generally described above. The coating procedure as described in Experimental section A2 above, except that about a mixture of 40 grams dried polymer particles and 5 grams of pigment are mixed with about 50 g of 0.8-1.2 mm crystallized glass beads (such as Hi Bea Ceram C-20, 0.8-1.2 mm diameter, Hv hardness 880 Kgf/mm, specific density 3.18g/cm$^3$ obtained from Ohara Corp. New Jersey, USA) and are added to the clean, thin aluminum rectangular tray.

**EXAMPLE B2**

The dried polymer particles obtained from Example B1 were combined with carbon black pigment (Mogul L, Cabot Corporation, Billerica, MA) and charge control agent (Hostacopy N4P N203 VP2655 available from Clariant Corp., Coventry, RI) as indicated below. Table 3 summaries the samples prepared for VAIC coating.

**Table 3 Sample Descriptions**

| Sample ID | Binder | Pigment (wt%) | CCA (wt%) | VAIC Residence Time (min) | VAIC Power Lever |
|---|---|---|---|---|---|
| 2 | 90 | 10 | 0 | 120 | 34.5 Hz / 4.5 watts |
| 3 | 89 | 9.9 | 1.1 | 120 | 34.5 Hz / 4.5 watts |

Sample 2 was prepared by combining 40.5 g of the dried polymer obtained in Step 3 of Example B1, 4.5 g of the black pigment, and 200 g of the crystallized glass media beads in a clean, thin aluminum rectangular tray. In this situation, all of the charge was added prior to VAIC coating. It is understood that the addition sequence and addition time relative to fluidization can be varied.

Sample 3 was prepared by combining 40.5 g of the dried polymer obtained in Step 3 of Example B1, 4.5 g of the black pigment, 0.5 g of charge control agent, and 200 g of the crystallized glass media beads in a clean, thin aluminum rectangular tray. In this situation, all of the charge was added prior to VAIC coating. It is understood that the addition sequence and addition time relative to fluidization can be varied.

**B3. Evaluation of Toner Particles**

**1) Q/M by Blow-off Tester**

The 2 VAIC coated samples obtained in Example B2 were mixed (0.5 g per sample) with a carrier powder (9.5 g, Canon 3000-4000 carrier, K101, Type TefV 150/250, Japan). After low speed mixing of 5, 15 and 30 minutes, the 0.2 g of toner/carrier developer was analyzed using a Toshiba Blow-off tester to obtain the specific charge (in microCoulombs/gram) of each developer. At least three such measurements were made, yielding a mean value and a standard deviation. The data was monitored for quality, namely, a visual observation that nearly all of the toner was blown off of the carrier during the measurement. Toners of known charging properties were also run as test calibration standards.

### 2) Toner Particle Size

The VAIC coated samples obtained from Example B2 were dispersed in Norpar™ 12 which contain 1% Aerosol OT (dioctyl sodium sulfosuccinate, sodium salt, Fisher Scientific, Fairlawn, NJ). The toner particle size was measured using a Horiba LA-900 laser diffraction particle size analyzer, as described above.

The toner particle size and charge (Q/M) values were determined for each material, as listed in Table 4.

**Table 4. Dry Toner By VAIC**

| Sample ID | $D_V$ ($\mu$m) | Q/M | |
|---|---|---|---|
| | | Test Section (min) | ($\mu$C/g) |
| 2 | 9.1 | 5 | -18.35 |
| | | 15 | -15.4 |
| | | 30 | -12.7 |
| 3 | 9.1 | 5 | -15.06 |
| | | 15 | -16.30 |
| | | 30 | -18.46 |

All patents, patent documents, and publications cited herein are incorporated by reference as if individually incorporated. Unless otherwise indicated, all parts and percentages are by weight and all molecular weights are weight average molecular weights. The foregoing detailed description has been given for clarity of understanding only. No unnecessary limitations are to be understood therefrom. The invention is not limited to the exact details shown and described, for variations obvious to one skilled in the art will be included within the invention defined by the claims.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

### Claims

1. A process for adhering a coating material to a host particle, comprising the steps of:

   a) providing a blend comprising a coating material and host particles in a coating vessel, and
   b) exposing the coating vessel comprising the blend to vibrational force in an amount sufficient to cause the coating material and the host particles to collide with sufficient force to cause the coating material to adhere to the surface of the host particle, **characterized in that**

the resulting coated particles are toner particles.

2. The process of claim 1, wherein sufficient vibrational force is imparted to the coating vessel to fluidize the coating material and the host particles.

3. The process of either of claims 1 and 2, wherein energy is imparted to the blend at a rate of less than about 0.1 watts per gram of the blend.

4. The process of either of claims 1 and 2, wherein energy is imparted to the blend at a rate of less than about 0.025 watts per gram of the blend.

5. The process of any preceding claim, wherein the vibrational force is imparted by a device that can be modulated in frequency.

6. The process of any of claims 1 to 4, wherein the vibrational force is imparted by a device that can be modulated in amplitude.

7. The process of any of claims 1 to 4, wherein the vibrational force is imparted by a device that can be modulated both in frequency and amplitude.

8. The process of any preceding claim, wherein the vibrational force is imparted by mechanical displacement of the coating vessel.

9. The process of any of claims 1 to 7, wherein the vibrational force is imparted by physical impact of a striking mechanism on the coating vessel.

10. The process of any preceding claim, wherein the vibrational force is imparted acoustically.

11. The process of any preceding claim, wherein the blend further comprises additional collision media.

12. The process of claim 11, wherein the additional collision media have a density greater than 2 g/cm$^3$

13. The process of claim 12, wherein the coating material and host particles have a density less than about 2 g/cm$^3$.

14. The process of any of claims 11 to 13, wherein the additional collision media have a Rockwell C Scale Hardness value greater than about 40.

15. The process of claim 14, wherein the coating material and host particles have a Rockwell C Scale Hardness value greater than about 50.

16. The process of any of claims 11 to 15, wherein the additional collision media are removed from the blend after the coating material is adhered to the surface of the host particle.

17. The process of any preceding claim, wherein the host particles have a Moh's hardness of less than about 4.

18. The process of any preceding claim, wherein the host particles are polymeric binder particles.

19. The process of claim 18, wherein the polymeric binder particles have a $T_g$ at the surface of the particles of less than about 50° C.

20. The process of either of claims 18 and 19, wherein the polymeric binder particles are formed from random polymers.

21. The process of any of claims 18 to 20, wherein the polymeric binder particles are formed from a polymeric binder comprising at least one amphipathic graft copolymer comprising one or more S material portions and one or more D material portions.

22. The process of any preceding claim, wherein the weight ratio of host particle to coating material coated on the host particle in the resulting coated particle is 50:1 to 1:1.

23. The process of any of claims 1 to 21, wherein the weight ratio of host particle to coating material coated on the host particle in the resulting coated particle is 20:1 to 5:1.

24. The process of any preceding claim, wherein the blend is substantially free of magnetic material.

25. The process of any preceding claim, wherein the coating material comprises at least one visual enhancement additive.

26. The process of any preceding claim, wherein the coating material comprises at least one charge control agent or charge director.

**Patentansprüche**

1. Verfahren zum Anhaften eines Beschichtungsmaterials an einem Host-Partikel, das die Schritte aufweist:

   a) Bereitstellen eines Beschichtungsmaterial enthaltenden Gemisches und von Host-Partikeln in einem Beschichtungsbehälter, und
   b) Ausüben einer Vibrationskraft auf den das Gemisch enthaltenden Beschichtungsbehälter in einem Maße, das ausreicht, um das Beschichtungsmaterial und die Host-Partikel dazu zu bringen, mit ausreichender Kraft zu kollidieren, um das Beschichtungsmaterial an der Oberfläche des Host-Partikels anzuhaften, **dadurch gekennzeichnet, dass**

   die resultierenden beschichteten Partikel Toner-Partikel sind.

2. Verfahren nach Anspruch 1, bei dem auf den Beschichtungsbehälter eine ausreichende Vibrationskraft ausgeübt wird, um das Beschichtungsmaterial und die Host-Partikel zu verflüssigen.

3. Verfahren nach Anspruch 1 oder 2, bei dem die Energie bei einer Rate auf das Gemisch ausgeübt wird, die geringer als etwa 0,1 Watt pro Gramm des Gemisches ist.

4. Verfahren nach Anspruch 1 oder 2, bei dem die Energie bei einer Rate auf das Gemisch ausgeübt wird, die geringer als etwa 0,025 Watt pro Gramm des Gemisches ist.

5. Verfahren nach einem der vorhergehenden Ansprüche, bei dem die Vibrationskraft durch eine Vorrichtung ausgeübt wird, die in Bezug auf die Frequenz modulierbar ist.

6. Verfahren nach einem der Ansprüche 1 bis 4, wobei die Vibrationskraft durch eine Vorrichtung ausgeübt wird, die in Bezug auf die Amplitude modulierbar ist.

7. Verfahren nach einem der Ansprüche 1 bis 4, wobei die Vibrationskraft durch eine Vorrichtung ausgeübt wird, die sowohl in Bezug auf die Frequenz als auch auf die Amplitude modulierbar ist.

8. Verfahren nach einem der vorhergehenden Ansprüche, bei dem die Vibrationskraft durch mechanische Verlagerung des Beschichtungsbehälters ausgeübt wird.

9. Verfahren nach einem der Ansprüche 1 bis 7, bei dem die Vibrationskraft durch einen physikalischen Aufprall eines Schlagmechanismus' auf den Beschichtungsbehälter ausgeübt wird.

10. Verfahren nach einem der vorhergehenden Ansprüche, bei dem die Vibrationskraft akustisch ausgeübt wird.

11. Verfahren nach einem der vorhergehenden Ansprüche, bei dem das Gemisch ferner zusätzliche Kollisionsmedien aufweist.

12. Verfahren nach Anspruch 11, wobei die zusätzlichen Kollisionsmedien eine Dichte von mehr als 2 $g/m^2$ aufweisen.

13. Verfahren nach Anspruch 12, bei dem das Beschichtungsmaterial und die Host-Partikel eine Dichte von weniger als etwa 2 $g/cm^3$ aufweisen.

**14.** Verfahren nach einem der Ansprüche 11 bis 13, bei dem die zusätzlichen Kollisionsmedien einen Rockwell-C-Skalen-Härtewert von mehr als etwa 40 aufweisen.

**15.** Verfahren nach Anspruch 14, bei dem das Beschichtungsmaterial und die Host-Partikel einen Rockwell-C-Skalen-Härtewert von mehr als etwa 50 aufweisen.

**16.** Verfahren nach einem der Ansprüche 11 bis 15, bei dem die zusätzlichen Kollisionsmedien von dem Gemisch entfernt werden, nachdem das Beschichtungsmaterial an der Oberfläche der Host-Partikel anhaftet.

**17.** Verfahren nach einem der vorhergehenden Ansprüche, bei dem die Host-Partikel eine Moh's-Härte von weniger als etwa 4 aufweisen.

**18.** Verfahren nach einem der vorhergehenden Ansprüche, wobei die Host-Partikel polymerische Bindepartikel sind.

**19.** Verfahren nach Anspruch 18, bei dem die polymerischen Binderpartikel eine $T_g$ an der Oberfläche der Partikel von weniger als etwa 50°C aufweisen.

**20.** Verfahren nach Anspruch 18 oder 19, bei dem die polymerischen Binderpartikel aus zufälligen Polymeren ausgebildet sind.

**21.** Verfahren nach einem der Ansprüche 18 bis 20, bei dem die polymerischen Binderpartikel aus einem polymerischen Binder ausgebildet sind, der wenigstens ein amphypatisches Pfropf-Copolymer mit einem oder mehreren S-Materialbereichen und einem oder mehreren D-Materialbereichen aufweist.

**22.** Verfahren nach einem der vorhergehenden Ansprüche, bei dem das Gewichtsverhältnis des Host-Partikels zum Beschichtungsmaterial, das auf den Host-Partikel in dem resultierenden beschichteten Partikel beschichtet ist, 50:1 bis 1:1 beträgt.

**23.** Verfahren nach einem der Ansprüche 1 bis 21, bei dem das Gewichtsverhältnis des Host-Partikels zum Beschichtungsmaterial, das auf den Host-Partikel in dem resultierenden beschichteten Partikel beschichtet ist, 20:1 bis 5:1 beträgt.

**24.** Verfahren nach einem der vorhergehenden Ansprüche, bei dem das Gemisch im Wesentlichen kein magnetisches Material aufweist.

**25.** Verfahren nach einem der vorhergehenden Ansprüche, bei dem das Beschichtungsmaterial wenigstens ein visuell verbesserndes Additiv aufweist.

**26.** Verfahren nach einem der vorhergehenden Ansprüche, bei dem das Beschichtungsmaterial wenigstens ein Ladungssteuermittel oder einen Ladungsrichter aufweist.


**Revendications**

**1.** Procédé pour faire adhérer un matériau de revêtement à une particule hôte, comprenant les étapes consistant à :

a) fournir un mélange comprenant un matériau de revêtement et des particules hôtes dans une cuve de revêtement, et
b) exposer la cuve de revêtement comprenant le mélange à une force vibrationnelle d'une valeur suffisante afin de provoquer une collision entre le matériau de revêtement et les particules hôtes avec une force suffisante pour faire en sorte que le matériau de revêtement adhère à la surface de la particule hôte, **caractérisé en ce que** les particules revêtues obtenues sont des particules de toner.

**2.** Procédé selon la revendication 1, dans lequel une force vibrationnelle suffisante est appliquée à la cuve de revêtement pour fluidiser le matériau de revêtement et les particules hôtes.

**3.** Procédé selon l'une ou l'autre des revendications 1 et 2, dans lequel une énergie est appliquée au mélange à un taux inférieur à environ 0,1 watt par gramme du mélange.

**4.** Procédé selon l'une ou l'autre des revendications 1 et 2, dans lequel une énergie est appliquée au mélange à un taux inférieur à environ 0,025 watt par gramme du mélange.

**5.** Procédé selon l'une quelconque des revendications précédentes, dans lequel la force vibrationnelle est appliquée par un dispositif qui peut être modulé en fréquence.

**6.** Procédé selon l'une quelconque des revendications 1 à 4, dans lequel la force vibrationnelle est appliquée par un dispositif qui peut être modulé en amplitude.

**7.** Procédé selon l'une quelconque des revendications 1 à 4, dans lequel la force vibrationnelle est appliquée par un dispositif qui peut être modulé à la fois en fréquence et en amplitude.

**8.** Procédé selon l'une quelconque des revendications précédentes, dans lequel la force vibrationnelle est appliquée par un déplacement mécanique de la cuve de revêtement.

**9.** Procédé selon l'une quelconque des revendications 1 à 7, dans lequel la force vibrationnelle est appliquée par un impact physique d'un mécanisme de percussion sur la cuve de revêtement.

**10.** Procédé selon l'une quelconque des revendications précédentes, dans lequel la force vibrationnelle est appliquée de manière acoustique.

**11.** Procédé selon l'une quelconque des revendications précédentes, dans lequel le mélange comprend, en outre, un matériau de collision supplémentaire.

**12.** Procédé selon la revendication 11, dans lequel le matériau de collision supplémentaire a une masse volumique supérieure à 2 g/cm$^3$.

**13.** Procédé selon la revendication 12, dans lequel le matériau de revêtement et les particules hôtes ont une masse volumique inférieure à environ 2 g/cm$^3$.

**14.** Procédé selon l'une quelconque des revendications 11 à 13, dans lequel le matériau de collision supplémentaire a un indice de dureté sur l'échelle C de Rockwell supérieur à environ 40.

**15.** Procédé selon la revendication 14, dans lequel le matériau de revêtement et les particules hôtes ont un indice de dureté sur l'échelle C de Rockwell supérieur à environ 50.

**16.** Procédé selon l'une quelconque des revendications 11 à 15, dans lequel le matériau de collision supplémentaire est éliminé du mélange après que le matériau de revêtement ait adhéré à la surface de la particule hôte.

**17.** Procédé selon l'une quelconque des revendications précédentes, dans lequel les particules hôtes ont un indice de dureté sur l'échelle de Moh inférieur à environ 4.

**18.** Procédé selon l'une quelconque des revendications précédentes, dans lequel les particules hôtes sont des particules de liant polymérique.

**19.** Procédé selon la revendication 18, dans lequel les particules de liant polymérique ont une $T_g$ à la surface des particules inférieure à environ 50° C.

**20.** Procédé selon l'une ou l'autre des revendications 18 et 19, dans lequel les particules de liant polymérique sont formées à partir de polymères aléatoires.

**21.** Procédé selon l'une quelconque des revendications 18 à 20, dans lequel les particules de liant polymérique sont formées à partir d'un liant polymérique comprenant au moins un copolymère amphipatique greffé comprenant une ou plusieurs portions de matériau S et une ou plusieurs portions de matériau D.

**22.** Procédé selon l'une quelconque des revendications précédentes, dans lequel le rapport pondéral de la particule hôte au matériau de revêtement appliqué sur la particule hôte dans la particule revêtue obtenue est de 50:1 à 1:1.

**23.** Procédé selon l'une quelconque des revendications 1 à 21, dans lequel le rapport pondéral de la particule hôte au matériau de revêtement appliqué sur la particule hôte dans la particule revêtue obtenue est de 20:1 à 5:1.

**24.** Procédé selon l'une quelconque des revendications précédentes, dans lequel le mélange est sensiblement dépourvu de matériau magnétique.

**25.** Procédé selon l'une quelconque des revendications précédentes, dans lequel le matériau de revêtement comprend au moins un additif d'amélioration d'aspect visuel.

**26.** Procédé selon l'une quelconque des revendications précédentes, dans lequel le matériau de revêtement comprend au moins un agent de commande de charge ou d'orientation de charge.

# Fig. 1

EP 1 595 603 B1